# EUROPÄISCHE PATENTSCHRIFT

(11) **EP 0 807 091 B1**
(45) Veröffentlichungstag und Bekanntmachung des Hinweises auf die Patenterteilung: **06.05.1999**
(21) Anmeldenummer: 96902915.6
(22) Anmeldetag: 24.01.1996
(51) Int. Cl.: C04B 24/16, C08G 63/688

(54) **VERWENDUNG VON SULFOGRUPPEN ENTHALTENDEN POLYESTERN ZUR VERFLÜSSIGUNG HYDRAULISCHER BINDEMITTEL**
USE OF SULPHO GROUP-CONTAINING POLYESTERS FOR DISPERSING HYDRAULIC BINDERS
UTILISATION DE POLYESTERS COMPORTANT DES GROUPES SULFO COMME ADJUVANT DISPERSANT

(30) Priorität: 02.02.1995 DE 19503278
(43) Veröffentlichungstag der Anmeldung: 19.11.1997
(73) Patentinhaber: Henkel Kommanditgesellschaft auf Aktien, 40191 Düsseldorf (DE)
(72) Erfinder: WEGENER, Ingo, D-40589 Düsseldorf (DE); FEUSTEL, Dieter, D-40789 Monheim (DE); BIRNBRICH, Paul, D-42719 Solingen (DE); ULLRICH, Claudia, D-40235 Düsseldorf (DE)
(86) Internationale Anmeldenummer: EP9600281
(87) Internationale Veröffentlichungsnummer: WO9623742

(56) Entgegenhaltungen:
- EP-A- 0 321 818
- EP-A- 0 589 256
- US-A- 5 360 787

## Beschreibung

### Gebiet der Erfindung

Die Erfindung betrifft die Verwendung von Sulfogruppen enthaltenden Polyestern mit verbesserter biologischer Abbaubarkeit zur Verflüssigung von hydraulischen Bindemitteln.

### Stand der Technik

Der Zusatz von Additiven zu hydraulischen Bindemitteln, z.B. Zement oder Gips, zur Erleichterung ihrer Verarbeitbarkeit, insbesondere zur Verbesserung ihrer Fließfähigkeit ist bekannt. Für diese Zwecke werden im allgemeinen verschiedene Liginsulfonate oder Melamin-Formaldehyd-Kondensate eingesetzt. Diese Verbindungsklassen haben sich technisch bewährt, von Nachteil ist aber, das sie nur schlecht biologisch abgebaut werden können.

Die Verflüssiger werden besonders bei der industriellen Herstellung von Betonfertigteilen oder Gipskartonplatten eingesetzt. Bei der Verarbeitung der Gipskartonplatten fallen oftmals Abfälle an oder die Platten werden bei Umbaumaßnahmen emeuert. Diese Abfälle müssen als Bauschutt entsorgt und deponiert werden, dabei darf von ihnen keinerlei Gefährdung für das Grundwasser ausgehen. Wenn aus der Herstellung der Gipskattonplatten noch Ligninsulfonate enthalten sind, kann deren Freisetzung in das Grundwasser nicht völlig ausgeschlossen werden.

Unter ökologischen Gesichtspunkten ist es daher wünschenswert, die bisher hauptsächlich eingesetzten Verbindungen aus der Klasse der Ligninsulfonate oder Melamin-Formaldehyd-Kondensate durch ähnlich wirksame, aber besser biologisch abbaubare Substanzen zu ersetzen.

Es wurden bereits Polykondensate als Verflüssiger für hydraulische Bindemittel vorgeschlagen, so z.B. in der DE-A1 37 43 413 wasserlösliche Kondensate aus Fettsäuren, Alkanolaminen und Sulfobemsteinsäure.

Sulfobernsteinsäure-Einheiten enthaltende Polyester sind ebenfalls bekannt.

In der US-PS-24 54 546 werden Polyester aus Sulfobemsteinsäure und Diolen mit 6 bis 18 C-Atomen beschrieben. Diese Polyester können für die Stabilisierung von O/W-Emulsionen verwendet werden.

In der DE-OS-16 17 123 werden Polyester aus Sulfobemsteinsäure und Diolen mit 2 bis 4 C-Atomen als Vergrauungsinhibitoren für Waschmittel beansprucht.

Die DE-OS-25 06 156 beschreibt Polyester aus Diolen, ungesättigten Dicarbonsäuren und gesättigten Dicarbonsäuren, in die durch Addition von Hydrogensulfit an die Doppelbindungen der ungesättigten Dicarbonsäuren Sulfogruppen eingeführt wurden. Die Polyester werden zur Herstellung wäßriger Dispersionen von Feststoffen verwendet, speziell als Hilfsmitttel für die Färbung von Textilfasern.

Die DE-OS-29 04 395 beschreibt Polyester aus Diolen mit 2 bis 8 C-Atomen, ggf. cyclischen Diolen oder Polyalkylenglykolen, ungesättigten Dicarbonsäuren, ggf. gesättigten Dicarbonsäuren und einer Dicarbonsäure, die durch Addition von Acrylsäure an Linolsäure erhältlich ist. Die Einführung der Sulfogruppen in das Polymer erfolgt durch Addition von Hydrogensulfit an die Doppelbindungen der ungesättigten Dicarbonsäuren. Die Polyester werden zur Herstellung von wäßrigen Dispersionen von Farbstoffen verwendet. In der Schrift wird erwähnt, daß die Polyester im allgemeinen gut abbaubar sind. Nähere Hinweise, ob darunter eine biologische Abbaubarkeit zu verstehen ist oder experimentelle Belege finden sich nicht.

DE-OS-35 19 678 beschreibt Polyester aus Carbonsäuredialkanolamiden und Sulfodicarbonsäuren als Dispergiermittel für Kohlesuspensionen.

Die Aufgabe der vorliegenden Erfindung ist es gewesen, Verflüssiger für hydraulische Bindemittel zur Verfügung zu stellen, die bei gleicher Wirksamkeit wie die bisher für diese Zwecke bekannten Verbindungen eine verbesserte biologische Abbaubarkeit aufweisen. Die Verflüssiger sollten bei ihrem Einsatz auch andere Eigenschaften der hydraulischen Bindemittel, beispielsweise das Schaumvermögen, die Luftporenbildung und das Abbindevermögen, nicht beeinträchtigen.

Überraschenderweise wurde gefunden, daß sulfitierte Polyester aus Diolen und Maleinsäure hervorragende Wirksamkeit als Verflüssiger für Gips aufweisen.

### Beschreibung der Erfindung

Gegenstand der Erfindung ist die Verwendung von Polyestern mit Sulfogruppen aus
a) Diolen
b) Dicarbonsäuren mit Sulfogruppen
c) gewünschtenfalls Dicarbonsäuren ohne Sulfogruppen zur Verflüssigung von hydraulischen Bindemitteln.

Unter hydraulischen Bindemitteln versteht man mineralische Stoffe, die unter Wasseraufnahme an der Luft oder unter Wasser steinartig erhärten und nach dem Aushärten wasserbeständig sind. Beispiele dafür sind Zement und Gips.
Erfindungsgemäß bevorzugtes hydraulisches Bindemittel ist der Gips.

Die Herstellung der erfindungsgemäßen Polyester zur Verflüssigung der hydraulischen Bindemittel kann nach an sich bekannten Methoden erfolgen.

Beispielsweise können die Dicarbonsäuren mit Sulfogruppen, gewünschtenfalls die Dicarbonsäuren ohne Sulfogruppen und die Diole in einer Veresterungsreaktion zu Polyestern umgesetzt werden.

Ebenso ist es möglich, diese Polyester durch eine Umesterungsreaktion der Diole mit Estern der genannten Dicarbonsäuren mit niedrigen Alkoholen, wie z.B. Methanol, Ethanol, Propanol und Butanol herzustellen.

Die Einführung der Sulfogruppen kann auch durch Anlagerung von Hydrogensulfit-Resten an olefinische Doppelbindungen enthaltende Dicarbonsäurereste erfolgen. Die dafür notwendigen, olefinische Doppelbindungen enthaltenden Polyester können aus olefinische Doppelbindungen enthaltenden Dicarbonsäuren, gewünschtenfalls Dicarbonsäuren ohne Sulfogruppen und Diolen auf an sich übliche Weise durch Veresterung oder Umesterung hergestellt werden.

Als geradkettiges oder verzweigtes 2 bis 10 Kohlenstoffatome enthaltendes Diol kommen bevorzugt 1,2-Ethandiol, 1,2-Propandiol, 1,3-Propandiol, 1,2-Butandiol, 1,3-Butandiol, 1,4-Butandiol, 1,5-Pentandiol, 2-Methyl-1,4-butandiol, 2,2-Dimethyl-1,3-propandiol, 1,6-Hexandiol, 1,10-Decandiol und 1,4-Dihydroxymethyl-cyclohexan oder Gemische davon in Frage.
Besonders bevorzugt ist der Einsatz von 1,3-Butandiol, 1,6-Hexandiol und Diethylenglykol.

Auch die Additionsprodukte von 1 bis 5 mol Ethylen- oder Propylenoxid an die oben genannten Diole sind geeignet.

Es ist ebenfalls möglich, die Additionsprodukte von Ethylen- und/oder Propylenoxid an difunktionelle Phenole, z.B. an Hydrochinon, Resorcin, Bisphenol A, Bisphenol F oder Bisphenol S, einzusetzen.
Bevorzugt werden die kommerziell erhältlichen Additionsprodukte von Ethylen- und/oder Propylenoxid an Bisphenol A verwendet.

Es sind sowohl aromatische, wie z.B. Sulfoisophthalsäure, als auch aliphatische Dicarbonsäuren mit Sulfogruppen verwendbar. Bevorzugt wird Sulfobemsteinsäure verwendet.

Die molaren Menge an Dicarbonsäure mit Sulfogruppen liegt bei mindestens 50 mol%, bevorzugt zwischen 70 und 90 mol% - bezogen auf die Gesamtmenge an Dicarbonsäure.

Beispiele für Dicarbonsäuren ohne olefinische Doppelbindungen sind Oxalsäure, Malonsäure, Bemsteinsäure, Glutarsäure, Adipinsäure, Korksäure, Sebacinsäure, 1,11-Undecandisäure, 1,12-Dodecandisäure, Phthalsäure, Isophthalsäure, Terephthalsäure, Hexahydrophthalsäure, Tetrahydrophthalsäure oder Dimerfettsäure. Bevorzugt werden lineare, aliphatische Dicarbonsäuren mit 1 bis 18 C-Atomen, besonders bevorzugt Adipinsäure verwendet.

Die molare Menge an Dicarbonsäure ohne Sulfogruppen beträgt höchstens 50 mol%, bevorzugt zwischen 10 und 30 mol% - bezogen auf die Gesamtmenge an Dicarbonsäure.

Wenn die Einführung von Sulfogruppen über die Addition von Hydrogensulfit an olefinische Doppelbindungen erfolgen soll, können olefinische Doppelbindungen enthaltende Dicarbonsäuren oder ihre funktionellen Derivate wie Anhydride oder Ester von niederen Alkoholen, gewünschtenfalls in Abmischung mit anderen, keine olefinischen Doppelbindungen enthaltenden Dicarbonsäuren oder deren Derivaten zur Herstellung von Polyestem eingesetzt werden.

Die molaren Mengen an Dicarbonsäure mit olefinischer Doppelbindung können bei mindestens 50, bevorzugt zwischen 70 und 90 mol% - bezogen auf die Gesamtmenge an Dicarbonsäure - liegen.

Bevorzugt verwendete olefinische Doppelbindungen enthaltende Dicarbonsäuren sind Maleinsäure oder Fumarsäure. Besonders bevorzugt ist die Verwendung von Maleinsäureanhydrid.

Das Äquivalent-Verhältnis von COOH:OH bei der Veresterung der Diole mit den Dicarbonsäuren liegt im allgemeinen zwischen 2:1 und 1:2, bevorzugt zwischen 1,5:1 und 1:1,5. Wie bekannt, kann der Fachmann über das molare Verhältnis von Carboxyl- zu Hydroxylgruppen und den Umsatz bei der Veresterung das Molekulargewicht der resultierenden Polyester einstellen.

Die erfindungsgemäß eingesetzten Polyester mit Sulfogruppen besitzen ein Molekulargewicht (Zahlenmittel) von 500 bis 25.000, vorzugsweise von 1.000 bis 10.000.

Die Veresterung kann auf übliche Weise dadurch erfolgen, daß die Mischung der Diole und Dicarbonsäuren auf Temperaturen von 100 bis 250° C erhitzt und das Reaktionswasser abgetrennt wird.

Da die Dicarbonsäuren mit olefinischen Doppelbindungen bei den hohen Temperaturen der Veresterung zur Polymerisation neigen, ist es zweckmäßig, einen geeigneten Polymerisationsinhibitor zuzufügen. Dem Fachmann geläufige Inhibitoren sind z.B. substituierte oder unsubstituierte Phenole wie Hydrochinon, 2,4-t-Butylphenol und lonol oder Phenothiazin oder Triphenylphosphit.
Die Polymerisationsinhibitoren können in Mengen von 0,001 bis 1 Gew.% - bezogen auf Gesamtansatz - zugefügt werden.

Zur Beschleunigung der Reaktion können übliche Katalysatoren wie starke Säuren, z.B. Schwefelsäure, Phosphorsäure oder Toluolsulfonsäure in Mengen von 0,1 bis 5 Gew.% - bezogen auf Gesamtansatz - zugefügt werden. Auch der Zusatz von üblichen, die Veresterungsreaktion beschleunigenden Zinnverbindungen, wie z.B. Zinndioctoat, Zinnoxalat, Zinnoxid oder auch elementarem Zinn in der Form von Zinnschliff in Mengen von 0,01 bis 0,2 Gew.% -bezogen auf den Gesamtansatz - ist möglich.

Zur Entfernung des Reaktionswassers kann ein organisches Lösungsmittel verwendet werden, das mit Wasser ein Azeotrop bildet. Für diesen Zweck wohlbekannte Lösungsmittel sind z.B. Toluol, Cyclohexan, n-Hexan oder Xylol.

Bei der sich an die Veresterung anschließenden Addition von Hydrogensulfit-lonen an die Doppelbindungen der Dicarbonsäure-Einheiten im Polyester verläuft die Reaktion mit cis-substituierten Doppelbindungen schneller. Es kann daher von Vorteil sein, Polyester mit einem möglichst hohem Anteil von cis-substituierten Doppelbindungen herzustellen.

In einer bevorzugten Ausführungsform erreicht man einen besonders hohen Anteil an diesen Doppelbindungen dadurch, daß die Veresterungstemperatur so gewählt wird, daß noch keine nennenswerte Isomerisierung zum thermodynamisch stabileren trans-substituierten Produkt stattfindet. Dies kann dadurch erreicht werden, daß die Veresterung bei relativ niedrigen Temperaturen durchgeführt wird. Dabei wird zur Entfernung des Reaktionswassers ein relativ niedrig siedendes Lösungsmittel wie z.B. Toluol, Cyclohexan oder Benzinfraktionen mit Siedepunkten von 80 bis 150 °C und/oder eine relativ große Menge von z.B. 1 bis 5 Gew.% - bezogen auf die Summe aus Diolen und Dicarbonsäuren - an saurem Veresterungskatalysator verwendet.

Der Anteil an cis- bzw. trans-substituierten Doppelbindungen läßt sich durch dem Fachmann bekannte Methoden, insbesondere durch die Auswertung von ¹H-NMR-Spektren bestimmen. Da die Protonen an cis- oder trans-substituierten Doppelbindungen stark unterschiedliche chemische Verschiebungen aufweisen, kann durch Integration der Signale der relative Gehalt an cis-Doppelbindungen leicht bestimmt werden.

Die Polyester können neben der Veresterung von Dicarbonsäuren oder ihren Anhydriden auch über die Umesterung von Dicarbonsäure-Estem wie z.B. Maleinsäuredimethylester oder -diethylester mit Diolen hergestellt werden. Anstelle des Reaktionswassers wird in diesem Falle der entstehende Alkohol, z.B. Methanol oder Ethanol, abgetrieben.

Die Einführung von Sulfogruppen in die Polyester kann durch Addition von Hydrogensulfit an die olefinischen Doppelbindungen der Dicarbonsäure-Einheiten im Polyester auf an sich bekannte Weise durch Umsetzung mit Alkali- oder Erdalkali- oder Ammonium-Salzen der schwefligen oder pyroschwefligen Säure als Sulfitierungsmittel, wie z.B. Natriumhydrogensulfit oder Natriumdisulfit, erfolgen. Ein mol Natriumdisulfit entspricht 2 mol Hydrogensulfit bei der Sulfitierung. Bevorzugt wird Natriumdisulfit (Na₂S₂O₅) eingesetzt.

Die Menge an Hydrogensulfit oder Disulfit wird üblicherweise so bemessen,daß 50 bis 200 mol%, bevorzugt 75 bis 100 mol% an Hydrogensulfitionen - bezogen auf Doppelbindungen - für die Reaktion zur Verfügung gestellt werden.

Der Polyester, an dessen Doppelbindungen Hydrogensulfit addiert werden soll, kann in Form einer Lösung in einem mit Wasser zumindest teilweise mischbaren organischem Lösungsmittel vorgelegt werden.

Beispiele für wassermischbare Lösungsmittel sind Ethanol, 1-Propanol, 2-Propanol, 2-Butanol, 1,2-Ethandiol, 1,2-Propandiol, Propylenglykolmonomethylether, Butylglykol, Diethylenglykol, Diethylenglykoldimethylether, N-Methylpyrrolidon und Sulfolan.

Das Sulfitierungsmittel, bevorzugt in Form einer wäßrigen Lösung, wird auf einmal oder kontinuierlich zugegeben und bei Temperaturen von 80 bis 105 °C solange gerührt, bis alle Doppelbindungen Hydrogensulfit addiert haben oder ein konstanter Gehalt an Hydrogensulfit erreicht ist.

Der Hydrogensulfitgehalt kann durch dem Fachmann bekannte Methoden leicht bestimmt werden, z.B. durch lodometrie.

Es kann zweckmäßig sein, dem Polyester zu Beginn der Sulfitierung einen Emulgator mit Sulfogruppen, bevorzugt einen Ester der Sulfobemsteinsäure in Form seines Salzes mit einem Alkali-Metall, zuzusetzen. Besonders geeignete Ester der Sulfobemsteinsäure sind der Dioctylester oder Tridecylester in Form ihrer Na-Salze. Es ist auch möglich, zu Beginn der Sulfitierung einen Polyester mit Sulfogruppen für das erfindungsgemäße Verfahren, etwa aus einem vorherigen Ansatz, zuzugeben.
Die Menge des zugefügten Emulgators liegt zwischen 0,1 und 10 Gew.%, bevorzugt zwischen 1 und 5 Gew.% bezogen auf den zu sulfitierenden Polyester.

Nach einem weiteren Verfahren kann die Herstellung der Polyester mit Sulfogruppen neben der Veresterung mit einer olefinische Doppelbindungen enthaltenden Dicarbonsäure und anschließender Sulfitierung auch durch Umesterung der Alkoholkomponente mit niedermolekularen Estern der Sulfobemsteinsäure oder ihrer Salze, z.B. mit dem Natrium-Salz des Dimethylsulfobernsteinsäureesters oder des Dioctylsulfobemsteinsäureesters, erfolgen. Der Aufbau der Polyester erfolgt in diesem Fall unter Abspaltung des niedermolekularen Alkohols. Geeignete Umesterungsbedingungen sind Temperaturen von 100 bis 250 °C bei Normaldruck oder vermindertem Druck in Gegenwart üblicher Umesterungskatalysatoren wie Alkalimetallhydroxiden oder -alkoxiden oder Titanverbindungen oder Zinnverbindungen. Gegen Ende der Reaktion kann es zweckmäßig sein, zur Erleichterung der Alkoholentfernung unter vermindertem Druck zu arbeiten.

Das Äquivalent-Verhältnis von Estergruppen COOR zu den Hydroxylgruppen COOR:OH kann zwischen 2:1 und 1:2, bevorzugt zwischen 1,5:1 und 1:1,5 liegen.

Wenn Polyester auf Basis aromatischer, Sulfogruppen enthaltender Dicarbonsäuren oder auf Basis von Sulfobemsteinsäure hergestellt werden sollen, empfiehlt es sich, daß Gemisch aus aromatischer, Sulfogruppen enthaltender Dicarbonsäuren, Dicarbonsäuren ohne Sulfogruppe und Diolen unter Rühren und Inertgas auf Temperaturen von 100 bis 250 °C zu erwärmen und das Reaktionswasser abzutrennen.

Die erfindungsgemäßen Polyester fallen in Form von Pasten oder Lösungen an. Nach Entfernen des Lösungsmittels liegen Festköper oder zähviskose Massen vor.

Der Sulfogruppen enthaltende Polyester wird im allgemeinen in einem Anteil von 0,01 bis 2 Gew.-%, vorzugsweise von 0,1 bis 1,0 Gew.-% bezogen auf den Feststoffgehalt des zu verflüssigenden hydraulischen Bindemittels eingesetzt.

Die Zugabe kann direkt als Feststoff zum Bindemittel geschehen, es ist jedoch bevorzugt, die Polyester in dem Wasser aufzulösen, das dem hydraulischen Bindemittel zur Herstellung einer verarbeitungsfähigen Zement- oder Gipsmasse zugegeben wird.

Die nachfolgenden Beispiele beschreiben die Erfindung, ohne sie jedoch zu beschränken.

### Beispiele

Alle prozentualen Angaben verstehen sich, sofern nicht anders vermerkt, in Gewichtsprozent.

### Beispiel 1:

194,7 g (1,65 Mol) 1,6-Hexandiol, 139,7 g (1,425 Mol) Maleinsäureanhydrid, 11,0 g (0,075 Mol) Adipinsäure, 6,0 g Toluolsulfonsäurehydrat, 0,5 g Triphenylphosphit und 50 g Toluol wurden in einem 1l Dreihalskolben vorgelegt und aufgeschmolzen. Unter Stickstoffatmosphäre wurde bei 115°C unter Rückfluß gerührt und das entstehende Reaktionswasser azeotrop abdestilliert. Die Reaktion wurde bis zum Erreichen einer Säurezahl < 3 fortgesetzt. Anschließend wurde das Toluol abgezogen und das Produkt auf Raumtemperatur abgekühlt.

150 g des Polyesters und 150 g Dowanol PM (Methoxypropanol) wurden in einem 1 l Vierhalskolben mit Rührer, Thermofühler, Kühler, Tropftrichter und Stickstoffzuleitung vorgelegt. 0,25 g Diethylhexylsulfosuccinat wurden zugegeben und die Mischung wurde auf 75°C erwärmt. 58,3 g (0,307 Mol) Na₂S₂O₅ wurden in 105 g Wasser gelöst und in die Reaktionsmischung eingetropft. Anschließend wurde 5 Stunden bei 75°C gerührt. Es entstand ein wasserlöslicher Polyester mit 52 % Festkörper.

### Beispiel 2:

Analog Beispiel 1 wurden 194,7 g (1,65 Mol) 1,6-Hexandiol und 147 g (1,5 Mol) Maleinsäureanhydrid zu einem Polyester umgesetzt und 150 g davon mit 58,2 g (0,307 Mol) Na₂S₂O₅ sulfitiert.
Es entstand ein Polyester mit 52 % Festkörper.

### Beispiel 3:

Analog Beispiel 1 wurden 97,4 g (0,825 Mol) 1,6-Hexandiol, 143,6 (0,825 Mol) 1,10-Decandiol, 139,7 g (1,425 Mol) Maleinsäureanhydrid und 11,0 g (0,075 Mol) Adipinsäure zu einem Polyester umgesetzt und 150 g davon mit 51,2 g (0,269 Mol) Na₂S₂O₅ sulfitiert.
Es entstand ein Polyester mit 57 % Festkörper.

### Beispiel 4:

Analog Beispiel 1 wurden 171,6 g (1,65 Mol) Neopentylglykol, 139,7 g (1,425 Mol) Maleinsäureanhydrid und 11,0 g (0,075 Mol) Adipinsäure zu einem Polyester umgesetzt und 150 g davon mit 62,5 g (0,329 Mol) Na₂S₂O₅ sulfitiert.
Es entstand ein Polyester mit 59 % Festkörper.

### Beispiel 5:

Analog Beispiel 1 wurden 194,7 g (1,65 Mol) 1,6-Hexandiol, 117,6 g (1,2 Mol) Maleinsäureanhydrid und 43,8 g (0,3 Mol) Adipinsäure zu einem Polyester umgesetzt und 150 g davon mit 47,7 g (0,251 Mol) Na₂S₂O₅ sulfitiert.
Es entstand ein Polyester mit 56 % Festkörper.

### Beispiel 6:

Analog Beispiel 1 wurden 637 g (6 Mol) Diethylenglykol und 490 g (5 Mol) Maleinsäureanhydrid zu einem Polyester umgesetzt und mit 451,0 g (2,375 Mol) Na₂S₂O₅, gelöst in 643 g Wasser, sulfitiert.
Es entstand ein Polyester mit 70 % Festkörper.

### Beispiel 7:

Es wurde analog Beispiel 6 ein Polyester hergestellt und mit 404,0 g (2,125 Mol) Na₂S₂O₅, gelöst in 622 g Wasser, sulfitiert.
Es entstand ein Polyester mit 70 % Festkörper.

### Beispiel 8:

Es wurde analog Beispiel 6 ein Polyester hergestellt und mit 333,0 g (1,75 Mol) Na₂S₂O₅, gelöst in 592 g Wasser, sulfitiert.
Es entstand ein Polyester mit 70 % Festkörper.

### Beispiel 9:

Analog Beispiel 1 wurden 660,0 g (1,65 Mol) Dianol 22 (Additionsprodukt von 2 mol Ethylenoxid an Bisphenol A), 139,7 g (1,425 Mol) Maleinsäureanhydrid und 11,0 g (0,075 Mol) Adipinsäure zu einem Polyester umgesetzt und 150 g davon mit 24,6 g (0,13 Mol) Na₂S₂O₅ sulfitiert.
Es entstand ein Polyester mit 60 % Festkörper.

### Beispiel 10:

In einem 1l Dreihalskolben mit Rührer, Stickstoffeinleitung und Rückflußkühler mit Wasserabscheider wurden 268,0 g Na-Sulfoisophthalsäure (1 Mol), 212,0 g Diethylenglykol (2 Mol) und 1,4 g Swedcat4^{(R)} (handelsüblicher Katalysator der Firma Swedstab) zusammen mit 50 ml Xylol auf 150 °C erwärmt. Unter Rühren wurden in 4 Stunden 43 ml Wasser abgeschieden. Anschließend wurden 110,0 g (0,75 Mol) Adipinsäure zugegeben und unter Rühren bei 200 °C weitere 29 ml Wasser abgeschieden.

Die biologische Abbaubarkeit wurde im Zahn-Wellens-Test (Testmethode OECD 302 B) gemessen.
Die Ergebnisse sind in Tabelle 1 dargestellt.

**Tabelle 1:**

| biologische Abbaubarkeit im Zahn-Wellens-Test | | | | | |
|---|---|---|---|---|---|
| | Konz. mg/1 | biologische Abbaubarkeit in % nach | | | |
| | | 7 Tagen | 14 Tagen | 21 Tagen | 28 Tagen |
| Bsp. 1 | 250 | 50 | 70 | 78 | 83 |
| Bsp. 1 | 500 | 21 | 64 | 78 | 82 |

### Applikationsversuche:

Die Versuche mit Gips wurden so durchgeführt, daß man den Gips innerhalb von 15 sec in das gelösten Verflüssiger enthaltende Anmachwasser streute und weitere 15 sec sumpfen ließ. Das Wasser:Gips-Verhältnis betrug 0,6:1. 15 sec wurde mit einem Haushaltsschneebesen geschlagen. Direkt anschließend wurde ein Vicat-Ring (DIN 1168) mit dem Gipsbrei gefüllt und durch Anheben entleert. Das Ausbreitmaß, d.h. der Durchmesser des gebildeten Kuchens, wurde mittels eines Lineals gemessen.

Die Abbindezeit wurde dadurch ermittelt, daß die Kuchen in regelmäßigen Abständen mit einem Haushaltsmesser eingeschnitten wurden. Wenn die Ränder nicht mehr zusammenfließen und der Schnitt deutlich erkennbar ist, ist der Beginn des Abbindevorgangs erreicht. Das Abinden ist beendet, wenn durch den Druck eines 5 kg Gewichtes kein Wasser mehr aus dem Kuchen entweicht.

Zur Prüfung wurden die Verflüssiger in den angegebenen Konzentrationen - bezogen auf die Masse an Gips - im Anmachwaser gelöst. Die Konzentrationen beziehen sich auf Aktivsubstanz.

Die Ergebnisse der Messungen sind in Tabelle 2 dargestellt.

**Tabelle 2:**

| Prüfergebnisse Gipsverflüssigung | | | | |
|---|---|---|---|---|
| Verflüssiger | c | Fließmaß | Beginn des Abbindens | Ende des Abbindens |
| | [%] | [cm] | [min] | [min] |
| Norlig 415 | 0,1 | 22 | 3 | 11 |
| Norlig 415 | 0,8 | 32 | 5 | 17 |
| Bsp. 2 | 0,1 | 23 | 3 | 13 |
| Bsp. 2 | 0,8 | 27 | 4 | 16 |
| Bsp. 6 | 0,1 | 24 | 4 | 15 |
| Bsp. 6 | 0,8 | 30 | 5 | 15 |
| Bsp. 8 | 0,1 | 25 | 5 | 15 |
| Bsp. 8 | 0,8 | 32 | 5 | 14 |

Norlig^{R} 415 ist ein Ligninsulfonat der Firma Borregaard Lignotech. Es wurde Naturgips eingesetzt.

**Tabelle 3:**

| Einfluß der Gipsqualität | | | | |
|---|---|---|---|---|
| Verflüssiger | c | Fließmaß | Beginn des Abbindens | Ende des Abbindens |
| | [%] | [cm] | [min] | [min] |
| Norlig 415 | 0,1 | 28 | 7 | 22 |
| Norlig 415 | 0,8 | 33 | 6,5 | 23 |
| Bsp. 7 | 0,1 | 26 | 4 | 14 |
| Bsp. 7 | 0,8 | 32 | 4,5 | 15 |

**Tabelle 4:**

| Vergleich mit Melamin-Formaldehyd-Harzen | | | | |
|---|---|---|---|---|
| Verflüssiger | c | Fließmaß | Beginn des Abbindens | Ende des Abbindens |
| | [%] | [cm] | [min] | [min] |
| Melment F15 | 0,1 | 26 | 5 | 17 |
| Melment F15 | 0,8 | 35 | 5,5 | 17 |
| Bsp. 7 | 0,1 | 24 | 4,5 | 15 |
| Bsp. 7 | 0,8 | 32 | 5 | 14 |

Melmemt F 15 ist ein sulfoniertes Melamin-Polykondensationsprodukt der Firma SKW-Trostberg.

Für die Versuche in den Tabellen 3 und 4 wurde synthetischer Gips aus Rauchgasentschwefelungsanlagen, sogenannter REA-Gips eingesetzt.

Die Beispiele zeigen, daß die Polyester mit Sulfogruppen die Anforderungen an einen Verflüssiger:
- gute Verflüssigungswirkung
- schnelles Abbinden
ebenso gut erfüllen wie derzeit technisch eingesetzte Verbindungen.

**Tabelle 5:**

| Ergebnisse bei der Mitverwendung von tensidischen Luftporenbildnern | | | | |
|---|---|---|---|---|
| Verflüssiger | c | Fließmaß | Beginn des Abbindens | Ende des Abbindens |
| | [%] | [cm] | [min] | [min] |
| Norlig 415 | 0,1 | 32 | 4 | 14 |
| Norlig 415 | 0,8 | 32 | 5 | 19 |
| Bsp. 2 | 0,1 | 25 | 3,5 | 14 |
| Bsp. 2 | 0,8 | 30 | 5 | 18 |

Es wurde Naturgips eingesetzt.
Zusätzlich zum Verflüssiger wurden 0,05 Gew.% - bezogen uaf Gips - eines Luftporenbildners auf Basis eines Fettalkoholethersulfats-Na-Salzes eingesetzt.

## Patentansprüche

1. Verwendung von Polyestern mit Sulfogruppen aus
a) Diolen
b) Dicarbonsäuren mit Sulfogruppen
c) gewünschtenfalls Dicarbonsäuren ohne Sulfogruppen
zur Verflüssigung von hydraulischen Bindemitteln.

2. Verwendung von Polyestem mit Sulfogruppen nach Anspruch 1, dadurch gekennzeichnet, daß das hydraulische Bindemittel Gips darstellt.

3. Verwendung von Polyestern mit Sulfogruppen nach den Ansprüchen 1 und 2, dadurch gekennzeichnet, daß
b) Dicarbonsäuren mit Sulfogruppen in Mengen von mindestens 50 mol % - bezogen auf die Gesamtmenge an Dicarbonsäure, und
c) Dicarbonsäuren ohne Sulfogruppen in Mengen von höchstens 50 mol % - bezogen auf die Gesamtmenge an Dicarbonsäure eingesetzt werden.

4. Verwendung von Polyestem mit Sulfogruppen nach den Ansprüchen 1 bis 3, dadurch gekennzeichnet, daß Diole mit 2 bis 10 C-Atomen oder deren Additionsprodukte mit 1 bis 5 mol Ethylen- und/oder Propylenoxid verwendet werden.

5. Verwendung von Polyestem mit Sulfogruppen nach den Ansprüchen 1 bis 4, dadurch gekennzeichnet, daß als Dicarbonsäure mit Sulfogruppen Sulfobemsteinsäure verwendet wird.

6. Verwendung von Polyestem mit Sulfogruppen nach den Ansprüchen 1 bis 5, dadurch gekennzeichnet, daß als Dicarbonsäure ohne Sulfogruppe Dicarbonsäuren mit 1 bis 18 C-Atomen, bevorzugt Adipinsäure, verwendet werden.

7. Verwendung von Polyestern mit Sulfogruppen nach den Ansprüchen 1 bis 6, dadurch gekennzeichnet, daß das Äquivalentverhältnis COOH:OH zwischen 2:1 und 1:2, bevorzugt zwischen 1,5:1 und 1:1,5 liegt.

8. Verwendung von Polyestem mit Sulfogruppen nach den Ansprüchen 1 bis 7, dadurch gekennzeichnet, daß die Polyester in einem Anteil von 0,01 bis 2 Gew.-% - bezogen auf den Feststoffgehalt des zu verflüssigenden hydraulischen Bindemittels - eingesetzt werden.

## Claims

1. The use of sulfo-group-containing polyesters of
a) diols,
b) dicarboxylic acids containing sulfo groups and
c) optionally dicarboxylic acids with no sulfo groups for plasticizing hydraulic binders.

2. The use of sulfo-group-containing polyesters as claimed in claim 1, characterized in that the hydraulic binder is gypsum.

3. The use of sulfo-group-containing polyesters as claimed in claims 1 and 2, characterized in that
b) the dicarboxylic acids containing sulfo groups are used in quantities of at least 50 mole-%, based on the total quantity of dicarboxylic acid, and
c) the dicarboxylic acids with no sulfo groups are used in quantities of at most 50 mole-%, based on the total quantity of dicarboxylic acid.

4. The use of polyesters containing sulfo groups as claimed in claims 1 to 3, characterized in that diols containing 2 to 10 carbon atoms and addition products thereof with 1 to 5 moles of ethylene and/or propylene oxide are used.

5. The use of sulfo-group-containing polyesters as claimed in claims 1 to 4, characterized in that sulfosuccinic acid is used as the dicarboxylic acid containing sulfo groups.

6. The use of sulfo-group-containing polyesters as claimed in claims 1 to 5, characterized in that dicarboxylic acids containing 1 to 18 carbon atoms, preferably adipic acid, are used as the dicarboxylic acid with no sulfo groups.

7. The use of sulfo-group-containing polyesters as claimed in claims 1 to 6, characterized in that the equivalent COOH:OH ratio is between 2:1 and 1:2 and preferably between 1.5:1 and 1:1.5.

8. The use of sufo-group-containing polyesters as claimed in claims 1 to 7, characterized in that the polyesters are used in a quantity of 0.01 to 2% by weight, based on the solids content of the hydraulic binder to be plasticized.

## Revendications

1. Utilisation de polyesters ayant des radicaux sulfo, de :
a) diols,
b) diacides carboxyliques avec radicaux sulfo, et
c) facultativement, diacides carboxyliques sans radical sulfo,
pour fluidifier des liants hydrauliques.

2. Utilisation de polyesters ayant des radicaux sulfo suivant la revendication 1, caractérisée en ce que le liant hydraulique représente du plâtre.

3. Utilisation de polyesters ayant des radicaux sulfo suivant les revendications 1 et 2, caractérisée en ce que l'on met en oeuvre :
b) les diacides carboxyliques avec radicaux sulfo en des quantités d'au moins 50% en moles, sur base de la quantité totale en diacides carboxyliques, et
c) les diacides carboxyliques sans radical sulfo en des quantités d'au plus 50% en moles, sur base de la quantité totale en diacides carboxyliques.

4. Utilisation de polyesters ayant des radicaux sulfo suivant les revendications 1 à 3, caractérisée en ce que l'on utilise des diols ayant 2 à 10 atomes C ou leurs produits d'addition avec 1 à 5 moles d'oxyde d'éthylène et/ou de propylène.

5. Utilisation de polyesters ayant des radicaux sulfo suivant les revendications 1 à 4, caractérisée en ce que l'on utilise de l'acide sulfosuccinique comme diacide carboxylique avec radicaux sulfo.

6. Utilisation de polyesters ayant des radicaux sulfo suivant les revendications 1 à 5, caractérisée en ce que l'on utilise des diacides carboxyliques ayant 1 à 18 atomes C, de préférence l'acide adipique, comme diacides carboxyliques sans radical sulfo.

7. Utilisation de polyesters ayant des radicaux sulfo suivant les revendications 1 à 6, caractérisée en ce que le rapport en équivalents COOH:OH se situe dans l'intervalle allant de 2:1 à 1:2, de préférence de 1,5:1 à 1:1,5.

8. Utilisation de polyesters ayant des radicaux sulfo suivant les revendications 1 à 7, caractérisée en ce que les polyesters sont introduits en une proportion de 0,01 à 2% en poids, sur base de la teneur en matière solide du liant hydraulique à fluidifier.
